# EUROPÄISCHE PATENTSCHRIFT

(11) **EP 2 416 996 B1**
(45) Veröffentlichungstag und Bekanntmachung des Hinweises auf die Patenterteilung: **05.12.2012**
(21) Anmeldenummer: 10702877.1
(22) Anmeldetag: 08.02.2010
(51) Int. Cl.: B60T 13/66, B60T 8/44

(54) **VERFAHREN ZUM ERMITTELN DES IN DER UNTERDRUCKKAMMER EINES UNTERDRUCK-BREMSKRAFTVERSTÄRKERS HERRSCHENDEN DRUCKS**
METHOD OF DETERMINING A PRESSURE IN AN UNDERPRESSURE CHAMBER OF A PNEUMATIC BRAKE BOOSTER
PROCÉDÉ À DÉTERMINER LA PRESSION DANS UNE CHAMBRE À BAS PRESSION D'UN SERVOFREIN PNEUMATIQUE

(30) Priorität: 07.04.2009 DE 102009002241
(43) Veröffentlichungstag der Anmeldung: 15.02.2012
(73) Patentinhaber: Robert Bosch GmbH, 70442 Stuttgart (DE)
(72) Erfinder: Koestlmeier, Ralph, Ludwigsburg 71636 (DE); Gutoehrlein, Bernd, 71638 Ludwigsburg (DE)
(86) Internationale Anmeldenummer: PCT/EP2010/051478
(87) Internationale Veröffentlichungsnummer: WO 2010/115645

(56) Entgegenhaltungen:
- EP-A2- 0 967 131
- DE-A1- 10 112 284
- US-A1- 2008 238 189

## Beschreibung

### Stand der Technik

Die Erfindung betrifft ein Verfahren zum Ermitteln des in der Unterdruckkammer eines Unterdruck-Bremskraftverstärkers herrschenden Drucks, sowie ein Fahrerassistenzsystem für ein Kraftfahrzeug.

Zur Verstärkung der vom Fahrer aufgebrachten Bremskraft werden üblicherweise Unterdruck-Bremskraftverstärker eingesetzt. Solche Bremskraftverstärker umfassen im Wesentlichen eine Arbeitskammer und eine Unterdruckkammer, die durch eine Membran voneinander getrennt sind. Die Fläche der Membran und die Druckdifferenz zwischen den beiden Kammern bestimmen dabei im Wesentlichen die Verstärkung der Bremskraft. Der Unterdruck für die Unterdruckkammer wird üblicherweise durch die Luftansaugung des Verbrennungsmotors, oder bei Dieselfahrzeugen, durch eine Unterdruckpumpe erzeugt.

Aus dem Stand der Technik darüber hinaus sind Bremsassistenzfunktionen, wie z. B: "HBB" (Hydraulik Brake Boost) bekannt, die den Fahrer in kritischen Situationen unterstützen, indem sie die Bremskraft zusätzlich verstärken. Diesbezüglich wird insbesondere auf die DE 101 12 284 A1 verwiesen, die, soweit zulässig, in die Offenbarung dieser Anmeldung mit aufgenommen wird. Bekannte Bremsassistenzfunktionen nutzen in der Regel einen Drucksensor, um den in der Unterdruckkammer herrschenden Unterdruck zu messen. Aus dem Druck-Messwert kann schließlich die aktuell ausgeübte Bremskraft ermittelt werden. Somit ist es möglich, z. B. eine Bremskraftregelung durchzuführen. Ein mit einem eigenen Drucksensor ausgestatteter Unterdruck-Bremskraftverstärker bedeutet jedoch einen erheblichen Kosten- und Verdrahtungsaufwand.

Aus der EP 0 967 131 A2 ist ein verbessertes elektrisch unterstütztes Bremssteuerungsverfahren bekannt, bei dem ein Auslaufen eines Bremskraftverstärkers und eine Pedalkraft als eine Funktion von Hauptzylinderdruck und Motorunterdruck genau vorhergesagt werden, wodurch die Kosten für zusätzliche fest zugeordnete Sensoren vermieden werden. Dabei wird ein mathematisches Modell des Bremskraftverstärkers verwendet, um zumindest den Aufbringungskammerdruck und vorzugsweise die Bremspedalkraft des Fahrers auf der Grundlage von gemessenen Werten des Motorunterdrucks und des Hauptzylinderdrucks abzuschätzen. Die Merkmale des Oberbegriffs des unabhängigen Anspruchs 1 sind der EP 0 967 131 A2 ertnommen.

### Offenbarung der Erfindung

Die zu lösende Aufgabe ist es, das aus der EP 0 967 131 A2 bekannte Verfahren zu verfeinern.

Gelöst wird diese Aufgabe gemäß der Erfindung durch ein Verfahren mit den im Anspruch 1 angegebenen Merkmalen und durch ein Fahrerassistenzsystem mit den im nebengeordneten Anspruch angegebenen Merkmalen. Bevorzugte Ausgestaltungen der Erfindung ergeben sich aus den Unteransprüchen.

Gemäß der Erfindung wird vorgeschlagen, den Unterdruck im Bremskraftverstärker mit Hilfe eines mathematischen Modells zu bestimmen, das den Unterdruck aus verschiedenen anderen Messwerten berechnet. Auf einen zusätzlichen Drucksensor am Unterdruck-Bremskraftverstärker kann somit verzichtet werden. Das mathematische Modell verarbeitet vorzugsweise nur Messwerte von Sensoren, die ohnehin bereits im Fahrzeug verbaut sind. Die modellbasierte Berechnung des Unterdrucks hat außerdem den Vorteil, dass Kraftfahrzeuge auch nachträglich ohne größeren Aufwand umgerüstet werden können.

Der Unterdruck im Bremskraftverstärker wird vorzugsweise wenigstens aus einer oder mehreren der folgenden Größen bestimmt: dem Unterdruck im Ansaugtrakt des Verbrennungsmotors, oder dem vom Fahrer aufgebrachten Bremsdruck (Vordruck). Die Information über die Abstelldauer des Verbrennungsmotors ist wichtig, da der Unterdruck bei abgestelltem Verbrennungsmotor mit der Zeit gegen Null sinkt. Eine weitere Kenngröße kann auch die Leistung einer Unterdruckpumpe des Unterdruck-Bremskraftverstärkers sein. Die genannten Größen werden bei modernen Kraftfahrzeugen mittels standardmäßig vorhandener Sensoren ermittelt.

Da sich der Unterdruck im Unterdruck-Bremskraftverstärker bei einer Bremsbetätigung in Abhängigkeit von deren Dauer und Stärke verringert, wird der Bremsdruck (Vordruck) vorzugsweise über eine längere Zeit (mehrere s) erfasst. Eine mögliche Abnahme des Unterdruck im laufe der Zeit kann somit berücksichtigt werden.

Gemäß einer bevorzugten Ausgestaltung der Erfindung ist das mathematische Modell eine Software, die in einem Steuergerät hinterlegt ist. Das Modell lässt sich als ein Bündel von Gleichungen auffassen, mit deren Hilfe der Unterdruck am Unterdruck-Bremskraftverstärker bestimmt werden kann. Das Steuergerät ist vorzugsweise an einen Bus des Kraftfahrzeugs, wie z.B. den CAN-Bus, gekoppelt. Die genannten Sensoren sind vorzugsweise auch an diesen Bus gekoppelt. Über den Bus kann außerdem die Uhrzeit oder ein Takt bereitgestellt werden.

Der modelbasiert berechnete Unterdruck wird vorzugsweise von einer Assistenzfunktion, wie z. B. HBB, genutzt, die den Fahrer in kritischen Fahrsituationen durch automatische Bremseingriffe unterstützt. Die Assistenzfunktion kann z. B. eine Bremskraftregelung ausführen, bei der Istwert der Bremskraft aus dem berechneten Unterdruckwert bestimmt wird.

Gemäß einer speziellen Ausgestaltung der Erfindung kann ein zusätzlicher Bremskraftverstärker vorgesehen sein, der vom Bremsassistenten angesteuert wird.

Die Erfindung wird nachfolgend anhand der beigefügten Zeichnungen beispielhaft näher erläutert. Es zeigen:
- Fig. 1: den Zusammenhang zwischen Bremspedalkraft und Bremsdruck in einem schematischen Diagramm; und
- Fig. 2: das erfindungsgemäße Bremsassistenzsystem in einer schematischen Ansicht.

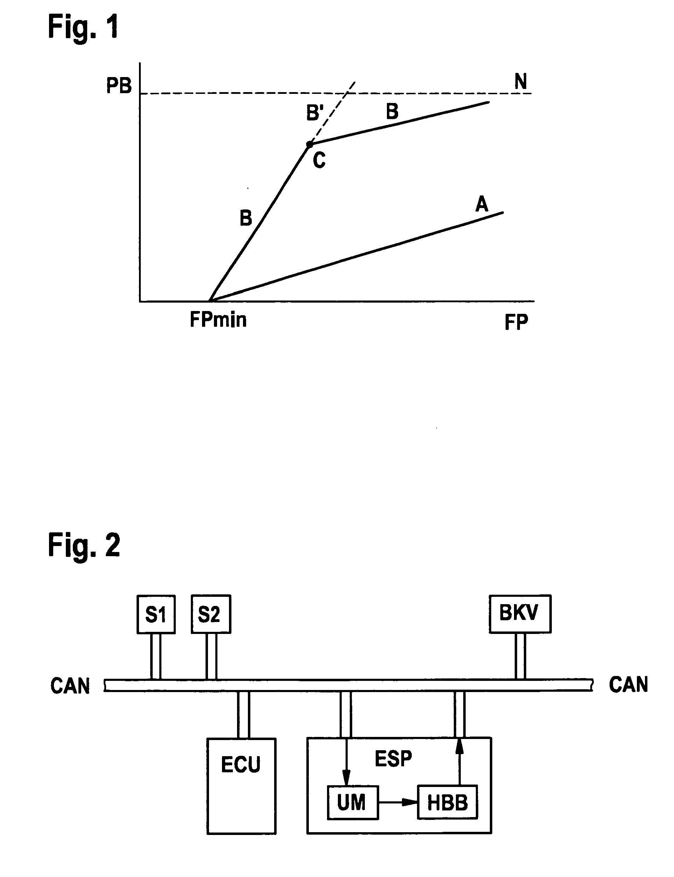

Fig. 1 zeigt den Zusammenhang zwischen der am Bremspedal ausgeübten Kraft FP und dem damit einhergehenden Bremsdruck PB. Die gepunktete Linie N repräsentiert das Blockierdruckniveau, ab dem die Räder blockieren und z.B. ein ABS-System eingreift.

Wie aus der Figur zu erkennen ist, verläuft der Bremsdruck PB nach Überschreiten einer Mindestbremskraft FPmin im Wesentlichen linear zur Bremspedalkraft FP (siehe Linie A). Wenn ein Unterdruck-Bremskraftverstärker eingesetzt wird, verläuft die Kennlinie steiler (siehe Linie B). Die Linie B zeigt am Punkt C, dem so genannten Aussteuerpunkt, einen Knick. Oberhalb des Punkts C ist die Verstärkung durch den Unterdruck-Bremskraftverstärker gleich Null, da der Unterdruck nicht mehr weiter abgesenkt werden kann. Um diese fehlende Verstärkung auszugleichen ist aus dem Stand der Technik eine "Hydraulic Brake Boost"-Funktion (HBB) bekannt. Mit Hilfe dieser Funktion kann eine Linearisierung des Kennlinienverlaufs oberhalb des Aussteuerpunkts C erreicht werden. Dies ist schematisch durch die gestrichelte Linie B' dargestellt. Die HBB-Funktion ist typischerweise in ein elektronisches Stabilitätsprogramm (ESP) eingebunden (siehe Fig. 2).

Die durch die HBB-Funktion bewirkte zusätzliche Bremskraftverstärkung ist abhängig von dem am Unterdruck-Bremskraftverstärker BKV anliegenden Unterdruck, der im Stand der Technik mittels eines Drucksensors gemessen wird. Um diesen Drucksensor einzusparen, ist vorgesehen, den Unterdruck mit Hilfe eines mathematischen Modells UM zu bestimmen, das den Unterdruck aus verschiedenen Messwerten berechnet. Das mathematische Modell UM ist hier zusammen mit der HBB-Funktion im ESP-Steuergerät ESP als Software hinterlegt. Das Steuergerät ist über eine Bus-Schnittstelle mit dem fahrzeugeigenen CAN-Bus CAN verbunden.

Das mathematische Modell berechnet hier den Druckwert aus dem aktuellen Unterdruck im Ansaugtrakt des Verbrennungsmotors, der von einem standardmäßig vorhandenen Sensor S1 der Motorsteuerung (ECU) gemessen und über den CAN-Bus an das ESP-Steuergerät ESP übermittelt wird. Die Unterdruck-Berechnung basiert ferner auf der vom Fahrer aufgebrachten Bremskraft FP bzw. dem entsprechenden Bremsdruck PB. Die Bremskraft FP oder der Bremsdruck wird mit Hilfe eines Sensors S2 gemessen und über den CAN-Bus an das ESP-System übermittelt. Die Berechnung des Unterdrucks berücksichtigt weiterhin die Zeitdauer, in der der Verbrennungsmotor ggf. abgestellt ist. Der Zeitwert oder ein entsprechender Takt wird ebenfalls auf dem CAN-Bus bereitgestellt. Anhand der Abstell-Zeitdauer kann bestimmt werden, wie stark der Druck in der Unterdruckkammer im Laufe der Zeit gestiegen ist. Dabei wird vorzugsweise auch berücksichtigt, wie oft die Bremse betätigt worden ist.

Der berechnete Druckwert wird von der HBB-Funktion genutzt, um z. B. eine Bremskraftregelung durchzuführen. Je nach Situation kann auch über den CAN-Bus oder analog (z.B. über ein Relais) ein zusätzlicher Bremskraftverstärker BKV (z.B. Vakuumpumpe) angesteuert werden, um durch Erhöhung des Vakuums die Bremskraft zusätzlich zu verstärken.)

## Patentansprüche

1. Verfahren zum Ermitteln des in der Unterdruckkammer eines Unterdruck-Bremskraftverstärkers (BKV) herrschenden Drucks, wobei der Druck mit Hilfe eines mathematischen Modells berechnet wird, **dadurch gekennzeichnet, dass** der Druck unter Berücksichtigung einer Zeitdauer berechnet wird, in der der Verbrennungsmotor des Fahrzeugs abgestellt ist.

2. Verfahren nach Anspruch 1, **dadurch gekennzeichnet, dass** der Druck unter Berücksichtigung des im Ansaugtrakt des Verbrennungsmotors herrschenden Unterdrucks berechnet wird.

3. Verfahren nach Anspruch 1 oder 2, **dadurch gekennzeichnet, dass** der Druck unter Berücksichtigung des vom Fahrer aufgebrachten Bremsdrucks oder einer Bremskraft berechnet wird.

4. Verfahren nach wenigstens einem der vorausgehenden Ansprüche, **dadurch gekennzeichnet, dass** das mathematische Modell (UM) als Software in einem Steuergerät (ESP) hinterlegt ist.

5. Steuergerät speziell aus gelegt zum Durchführen eines der vorhergehend beanspruchten Verfahren.

6. Fahrerassistenzsystem für ein Kraftfahrzeug, das in bestimmten Fahrsituationen einen automatischen Bremseingriff auslöst, **dadurch gekennzeichnet, dass** das Fahrerassistenzsystem ein Steuergerät mit einem Algorithmus umfasst, der den in der Unterdruckkammer eines Unterdruck-Bremskraftverstärkers (BKV) herrschenden Druck gemäß dem Verfahren nach einem der vorausgehenden Ansprüche 1-4 berechnet.

## Claims

1. Method for determining the pressure which prevails in the vacuum chamber of a vacuum brake booster (VBB), the pressure being calculated with the aid of a mathematical model, **characterized in that** the pressure is calculated with consideration of a time period, in which the internal combustion engine of the vehicle is switched off.

2. Method according to Claim 1, **characterized in that** the pressure is calculated with consideration of the vacuum which prevails in the intake section of the internal combustion engine.

3. Method according to Claim 1 or 2, **characterized in that** the pressure is calculated with consideration of the brake pressure which is applied by the driver or of a brake force.

4. Method according to at least one of the preceding claims, **characterized in that** the mathematical model (UM) is stored as software in a control unit (ESP).

5. Control unit which is designed specifically for carrying out one of the previously claimed methods.

6. Driver assistance system for a motor vehicle, which system triggers an automatic brake intervention in defined driving situations, **characterized in that** the driver assistance system comprises a control unit with an algorithm which calculates the pressure which prevails in the vacuum chamber of a vacuum brake booster (VBB) in accordance with the method according to one of the preceding Claims 1 to 4.

## Revendications

1. Procédé de détermination de la pression qui règne dans une chambre en dépression d'un amplificateur (BKV) de force de freinage à dépression, la pression étant calculée à l'aide d'un modèle mathématique,
**caractérisé en ce que**
la pression est calculée en tenant compte de la durée au cours de laquelle le moteur à combustion interne du véhicule est coupé.

2. Procédé selon la revendication 1, **caractérisé en ce que** la pression est calculée en tenant compte de la dépression qui règne dans le conduit d'aspiration du moteur à combustion interne.

3. Procédé selon les revendications 1 ou 2, **caractérisé en ce que** la pression est calculée en tenant compte de la pression de freinage appliquée par le conducteur ou de la force de freinage.

4. Procédé selon au moins l'une des revendications précédentes, **caractérisé en ce que** le modèle mathématique (UM) est placé sous la forme d'un logiciel dans un appareil de commande (ESP).

5. Appareil de commande spécialement conçu en vue d'exécuter l'un des procédés revendiqués plus haut.

6. Système d'assistance au conducteur d'un véhicule automobile, qui déclenche une intervention automatique de freinage dans certaines situations de roulage, **caractérisé en ce que**
le système d'assistance au conducteur comporte un appareil de commande doté d'un algorithme qui calcule par le procédé selon les revendications 1 à 4 qui précèdent la pression qui règne dans une chambre en dépression d'un amplificateur (BKV) de force de freinage à dépression.
